# EUROPÄISCHE PATENTSCHRIFT

(11) **EP 2 197 726 B1**
(45) Veröffentlichungstag und Bekanntmachung des Hinweises auf die Patenterteilung: **12.01.2011**
(21) Anmeldenummer: 08801294.3
(22) Anmeldetag: 03.09.2008
(51) Int. Cl.: B62B 7/14, B62B 9/12, A61G 5/10, A61G 5/12

(54) **KINDERSPORTKARRE**
CHILDREN'S SPORT STROLLER
POUSSETTE POUR ENFANT

(30) Priorität: 18.09.2007 DE 102007044833
(43) Veröffentlichungstag der Anmeldung: 23.06.2010
(73) Patentinhaber: Otto Bock Healthcare GmbH, 37115 Duderstadt (DE)
(72) Erfinder: KRETSCHMER, Oliver, 74889 Sinsheim (DE); WILKE, Christian, 64668 Rimbach (DE); CHRISTMANN, Jürgen, 69245 Bammental (DE)
(74) Vertreter: Plöger, Jan Manfred
(86) Internationale Anmeldenummer: PCT/DE2008/001487
(87) Internationale Veröffentlichungsnummer: WO 2009/036734

(56) Entgegenhaltungen:
- EP-A- 0 479 132
- US-A- 3 784 252

## Beschreibung

Die Erfindung betrifft eine Kindersportkarre, insbesondere eine Rehabilitations-Kindersportkarre mit einem Gestell, einem Sitz und einer Schwenkvorrichtung, die den Sitz zumindest in Teilen mit dem Gestell um eine Sitz-Schwenkachse schwenkbar verbindet und ein erstes Gelenk und ein zweites Gelenk umfasst, die aufeinander gegenüber liegenden Seiten am Sitz angebracht sind, wobei das erste Gelenk und das zweite Gelenk arretierbar sind und wobei das erste Gelenk ein Erstgelenk-Bedienelement zum Lösen des ersten Gelenks umfasst.

Derartige Rehabilitations-Kindersportkarren sind beispielsweise aus der US 3,784,252 bekannt, um Kinder im Alter von zwei bis sechs Jahren, die körperlich behindert sind oder sich in der Rehabilitation nach einem ärztlichen Eingriff befinden, zu transportieren. Je nach Stimmung und Müdigkeitszustand des Kindes ist es vorteilhaft, den Rücken des Kindes unter verschiedene Winkel relativ zur Vertikalen neigen zu können. Dazu ist bei bekannten Rehabilitations-Kindersportkarren der Sitz geteilt ausgebildet und umfasst eine Rückenschale und eine Sitzschale. Die Rückenschale ist relativ zur Sitzschale verschwenkbar, so dass durch Neigen der Sitzschale der Rücken des Kindes unter verschiedenen Winkeln relativ zur Vertikalen gestützt wird,

Nachteilig an derartigen Rehabilitations-Kindersportkarren ist, dass dann, wenn die Rückenschale stark geneigt ist, ein stumpfer Winkel zwischen der Rückenschale und der Sitzschale entstehen kann. Hieraus resultiert eine hohe Belastung des Steißbeins des Kindes.

Aus der DE 20 2006 014 928 U1 ist ein Sportkinderwagen bekannt, dessen Sitz mittels eines Gelenks mit den Merkmalen des Oberbegriffs von Anspruch 1 schwenkbar ist. Nachteilig an dem beschriebenen Sportkinderwagen ist, dass das Bedienelement zum Lösen der Gelenke weit von den eigentlichen Gelenken beabstandet angeordnet ist. Es ergibt sich so eine umständliche Bedienung.

Aus der US 6,086,086 ist ein Kinderwagen bekannt, bei dem der Sitz durch Betätigen eines Schalters verschoben werden kann. Aus der DE 10 2004 022 843 B4 ist ein Liegeeinsatz für Kinder- und/oder Puppenwagengestelle bekannt, bei dem das Rückenteil verschwenkbar ist.

Der Erfindung liegt die Aufgabe zugrunde, eine Rehabilitations-Kindersportkarre anzugeben, deren Sitz besonders einfach und leichtgängig arretierbar ist.

Die Erfindung löst das Problem durch eine gattungsgemäße Kindersportkarre, insbesondere eine gattungsgemäße Rehabilitations-Kindersportkarre gemäß Anspruch 1.

Vorteilhaft an der Erfindung ist, dass der Sitz als Ganzes um die Sitz-Schwenkachse schwenkbar ausgebildet ist. Eine Teilung des Sitzes in ein schwenkbares Rückenteil und ein feststehendes Sitzteil ist nämlich nur deshalb notwendig, damit das Kind nicht unkontrolliert verrutscht, wenn die Schwenkvorrichtung mit beiden Händen gelöst wird. Da aber erfindungsgemäß nur ein Erstgelenk-Bedienelement vorgesehen sein muss, um sowohl das erste Gelenk als auch das zweite Gelenk zu lösen, reicht eine Hand zum Lösen der Schwenkvorrichtung aus. Mit der verbleibenden zweiten Hand kann das Kind festgehalten werden und es besteht keine Gefahr, dass es unkontrolliert beispielsweise nach hinten überkippt. Da daher der Sitz integral mittels der Schwenkvorrichtung an dem Gestell befestigt ist, kommt es dann, wenn der Rücken stark gegenüber der Vertikalen geneigt ist, zu den nur geringen

Kräften auf das Steißbein, da der Oberschenkel um den gleichen Betrag geschwenkt wird und so ein Gegengewicht bildet.

Es ist ein weiterer Vorteil, dass die Erfindung mit mechanisch einfachen Mittel umsetzbar ist. Fehlfunktionen werden dadurch weitgehend vermieden.

Ein weiterer Vorteil ist, dass das Kind in der Rehabilitations-Kindersportkarre während des Betätigens der Schwenkvorrichtung mit der Hand gehalten werden kann, so dass genau der Schwenkwinkel um die Sitz-Schwenkachse eingestellt werden kann, der den Wünschen des Kindes entspricht.

Im Rahmen der vorliegenden Beschreibung wird unter einem Gestell insbesondere ein Rahmen verstanden, an dem auch Räder der Kindersportkarre befestigt sind. Unter einem Sitz wird jegliche Vorrichtung verstanden, die dazu ausgebildet ist, um unmittelbar das Gewicht eines Kindes aufzunehmen, das in der Kindersportkarre transportiert wird. Es ist dazu nicht notwendig, dass das Kind unmittelbar auf dieser Vorrichtung zum Sitzen kommt. Unter einem Sitz wird insbesondere auch eine Vorrichtung verstanden, auf die beispielsweise eine Sitzschale oder eine Polsterung montierbar ist

Unter einer Übertragungsvorrichtung ist insbesondere jede Vorrichtung zu verstehen, die das Erstgelenk-Bedienelement mechanisch mit dem zweiten Gelenk koppelt. Diese Kopplung kann beispielsweise schubstabil, drehstabil oder dreh- und schubstabil ausgebildet sein.

In einer bevorzugten Ausführungsform umfasst die Übertragungsvorrichtung eine Schubstange. Unter einer Schubstange wird insbesondere jedes Bauteil verstanden, das eine Kraft oder ein Drehmoment von dem Erstgelenk-Bedienelement auf das zweite Gelenk überträgt und mechanisch so steif ausgelegt ist, dass es sich dann, wenn das Erstgelenk-Bedienelement betätigt wird, so wenig verformt, dass das zweite Gelenk sicher gelöst wird. Vorteilhaft hieran ist, dass die Schubstange eine besonders einfache und kostengünstig herstellbare Übertragungsvorrichtung darstellt. Schubstangen sind zudem sehr wenig versagensanfällig.

Besonders bevorzugt ist die Schubstange bogenförmig gebogen und in einer Betriebsstellung der Rehabilitations-Kindersportkarre zumindest teilweise unterhalb des Sitzes angeordnet. Dadurch wird erreicht, dass die Schubstange während des Betriebs nicht stört.

Vorzugsweise sind das erste und das zweite Gelenk in eine Arretierstellung vorgespannt, in der der Sitz nicht relativ zum Gestell schwenkbar ist. Günstig ist es, wenn das erste und das zweite Gelenk voneinander unabhängig vorgespannt sind, beispielsweise durch Federn oder ähnliche Kraftspeicher. Hierdurch wird sichergestellt, dass die Schwenkvorrichtung das Gestell mit dem Sitz drehfest verbindet, sofern nicht das Erstgelenk-Bedienelement betätigt wird.

In einer bevorzugten Ausführungsform ist das Erstgelenk-Bedienelement so ausgebildet, dass es eine Sicherungsstellung und eine Aktivierungsstellung besitzt und nur in der Aktivierungsstellung das erste Gelenk lösbar ist. Besonders bevorzugt ist das Erstgelenk-Bedienelement von der Sicherungsstellung in die Aktivierungsstellung schiebbar. Die Schieberichtung von der Sicherungsstellung in die Aktivierungsstellung verläuft bevorzugt im Wesentlichen senkrecht zu der Sitz-Schwenkachse. So wird eine besonders einfache Bedienung erreicht. Alternativ kann vorgesehen sein, dass das Erstgelenk-Bedienelement von der Sicherungsstellung in die Aktivierungsstellung drehbar ist.

Bevorzugt ist, dass das erste Gelenk so ausgebildet ist, dass es dadurch lösbar ist, dass das Erstgelenk-Bedienelement in Richtung der Sitz-Schwenkachse, insbesondere auf den Sitz zu, bewegt wird. Es ergibt sich so eine besonders intuitive Bedienung des Erstgelenk-Bedienelements.

Gemäß einer bevorzugten Ausführungsform ist vorgesehen, dass die Schubstange über eine Wippe auf ein Riegelelement des zweiten Gelenks wirkt. Das Riegelelement ist so angeordnet, dass es dann, wenn das Erstgelenk-Bedienelement nicht betätigt ist, das zweite Gelenk blockiert, das heißt an einer Schwenkbewegung hindert. Es ergibt sich so eine besonders eine einfache mechanische Ausbildung der Übertragungsvorrichtung.

Um zu verhindern, dass die Schwenkvorrichtung selbsttätig freigegeben wird, ist gemäß einer bevorzugten Ausführungsform vorgesehen, dass das Erstgelenk-Bedienelement in die Sicherungsstellung vorgespannt ist. Eine Losbrechkraft, die notwendig ist, um das Erstgelenk-Bedienelement aus der Sicherungsstellung in die Aktivierungsstellung zu bewegen, ist bevorzugt so groß gewählt, dass sie von Kindern im Alter von zwei bis sechs Jahren nicht aufgebracht werden kann. Alternativ kann die Losbrechkraft auch so klein gewählt sein, dass sie mit einem Finger aufbringbar ist, da Kinder die Kombination aus zwei sukzessiven Bewegungen in der Regel nicht ausprobieren.

Um die Schwenkvorrichtung von beiden Seiten der Kindersportkarre aus bedienbar zu machen, ist bevorzugt vorgesehen, dass das zweite Gelenk ein Zweitgelenk-Bedienelement zum Lösen des zweiten Gelenks besitzt, wobei das Zweitgelenk-Bedienelement mittels der Übertragungsvorrichtung so mit dem Erstgelenk verbunden ist, dass bei einem Lösen des zweiten Gelenks durch Betätigen des Zweitgelenk-Bedienelements auch das erste Gelenk gelöst wird.

Im Folgenden wird die Erfindung anhand einer bevorzugten Ausführungsform näher erläutert. Dabei zeigt
- Figur 1: eine perspektivische Ansicht eines Sitzes für eine erfindungsge- mäße Rehabilitations-Kindersportkarre,
- Figur 2: ein Gestell, das mit dem Sitz nach Figur 1 zu der erfindungsge- mäßen Rehabilitations-Kindersportkarre verbunden werden kann,
- Figur 3: eine schematische Schnittansicht durch den Sitz gemäß Figur 1,
- Figur 4: eine perspektivische Ansicht des Sitzes nach Figur 1,
- Figur 5: einen Ausschnitt aus Figur 4,
- Figur 6: eine geschnittene Seitenansicht durch ein Gelenk der Schwenkvorrichtung in einer Koppelstellung, bei der eine Relativ- Bewegung zwischen einer Rückenschale und einer Sitzschale des Sitzes gesperrt ist,
- Figur 7: die geschnittene Ansicht gemäß Figur 6, bei der die Rückenschale gegenüber der Sitzschale verschwenkbar ist und
- Figur 8: die Schnittansicht gemäß den Figuren 6 und 7, bei der die Rü- ckenschale in einer neuen Position relativ zur Sitzschale arretiert ist.

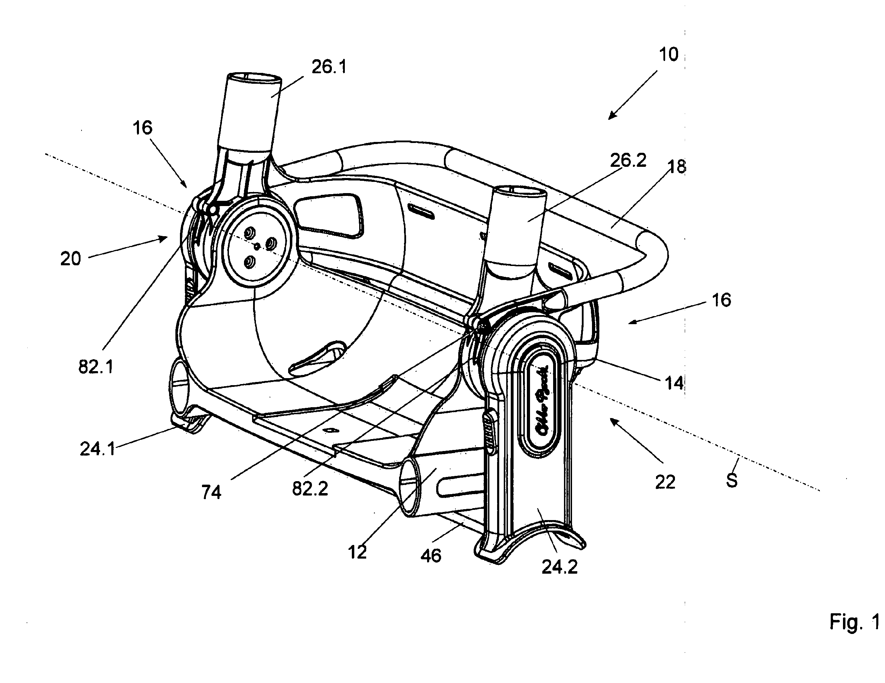

Figur 1 zeigt, einen Sitz 10, der eine Sitzschale 12 und eine Rückenschale 14 umfasst. Die Sitzschale 12 ist an ihren beiden Seiten mit einer Schwenkvorrichtung 16 verbunden, so dass sie um eine Schwenkachse S verschwenkbar ist. Die Rückenschale 14 ist ebenfalls mit der Schwenkvorrichtung 16 um die Schwenkachse S schwenkbar verbunden.

An der Schwenkvorrichtung 16 ist zudem ein Arretierbügel 18 um die Schwenkachse S schwenkbar befestigt, der um die Rückenschale 14 herum verläuft, so dass eine im Sitz 10 sitzende Person nicht in Kontakt mit dem Arretierbügel 18 kommt. In Figur 1 ist der Arretierbügel 18 in einer Koppelstellung gezeigt, in der die Rückenschale 14 relativ zur Sitzschale 12 fixiert ist. Der genaue Mechanismus hierzu ist weiter unten beschrieben.

Die Schwenkvorrichtung 16 umfasst ein erstes Gelenk 20 und ein zweites Gelenk 22, die beidseits von Sitzschale 12 und Rückenschale 14 angeordnet sind und jeweilige Anschlussstücke 24.1, 24.2 zum Verbinden mit einen Gestell besitzen. Die Schwenkvorrichtung 16 umfasst zudem Anschlusselemente 26.1, 26.2, die dazu ausgebildet sind, dass ein nicht eingezeichnetes Rückenrohr eingesteckt wird, an dem eine Sitzbespannung angebracht wird, die als Rückenlehne dient.

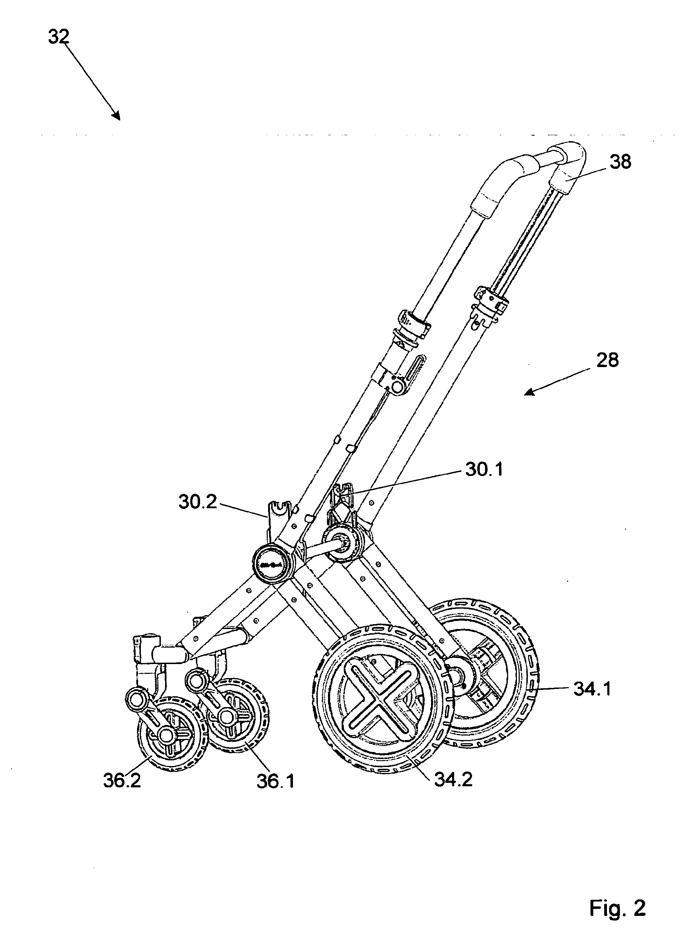

Figur 2 zeigt ein Gestell 28, das zwei Aufnahmestücke 30.1, 30.2 besitzt, die ausgebildet sind, um mit den Anschlussstücken 24.1, 24.2 (vgl. Figur 1) so zusammenzuwirken, dass der Sitz 10 mit dem Gestell 28 zu einer Rehabilitations-Kindersportkarre 32 verbunden kann.

Das Gestell 28 ist mit zwei Hinterrädern 34.1, 34.2 und zwei Vorderrädern 36.1, 36.2 verbunden. Das Gestell 28 umfasst zudem einen Schubbügel 38, mit dem die Rehabilitations-Kindersportkarre geschoben werden kann.

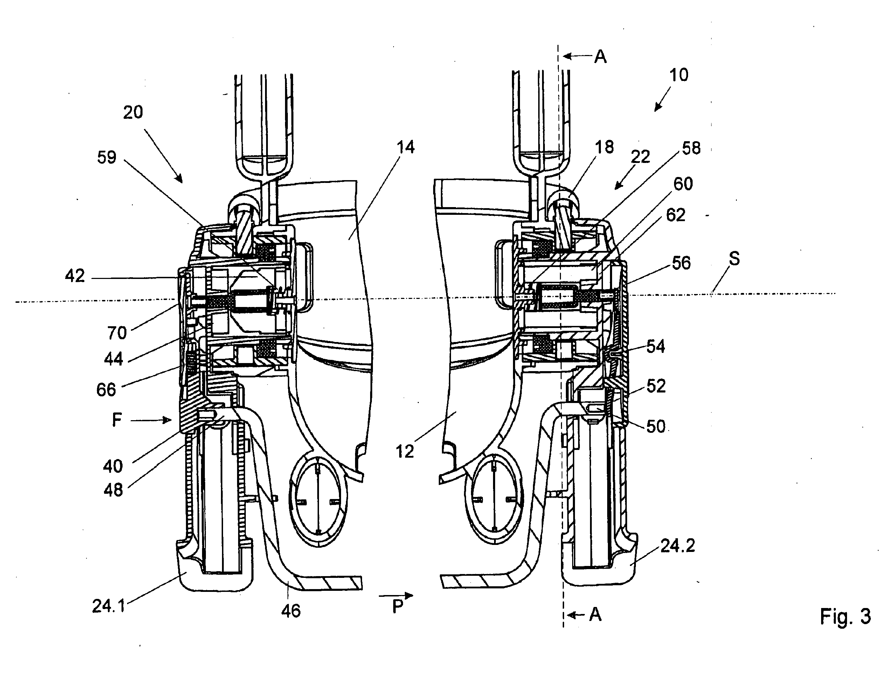

Figur 3 zeigt in einem schematischen Querschnitt den Sitz 10, wobei das zur Erläuterung irrelevante Zwischenteil des Sitzes herausgeschnitten ist. Das erste Gelenk 20 besitzt ein Erstgelenk-Bedienelement 40. Wird das Erstgelenk-Bedienelement 40 mit einer auf die Sitzschale 12 zu entlang der Schwenkachse S wirkenden Betätigungskraft F betätigt, so wird ein erster Läufer 42 entlang der Schwenkachse S nach innen verschoben und gelangt so außer Eingriff aus einer Verzahnungseinheit 44, die mit der Sitzschale 12 gekoppelt ist. Damit wird der Läufer 42 um die Schwenkachse S relativ zu der Verzahnungseinheit 44 und damit relativ zum Anschlussstück 24.1 schwenkbar.

Durch Aufbringen der Betätigungskraft F auf das Erstgelenk-Bedienelement 40 wird zudem eine Schubstange 46 entlang der Schwenkachse S in Richtung eines Pfeils P verschoben. Dazu ist ein erstes Ende 48 der Schubstange 46 mit dem Erstgelenk-Bedienelement 40 fest verbunden.

Bewegt sich die Schubstange 46 in Richtung des Pfeils P, so drückt ein dem ersten Ende 48 abgewandtes zweites Ende 50 der Schubstange 46 auf eine Wippe 52, die relativ zu dem Anschlussstück 24.2 in einer Auflagerstelle 54 gelagert ist. Dadurch schwenkt ein bezüglich der Auflagerstelle 54 von der Schubstange 46 abgewandtes Ende auf eines zweiten Läufers 56 zu und bewegt diesen entlang der Schwenkachse S nach innen. Der Begriff "innen" bezieht sich dabei auf den Sitz 10 als Ganzes.

Der zweite Läufer 56 ist über eine Feder 58 in eine Arretierstellung vorgespannt. Auf gleiche Weise ist der erste Läufer 42 über eine Feder 59 in eine Arretierstellung vorgespannt. Indirekt drückt die Federkraft der Feder 58 über die Wippe 52 und die Schubstange 46 das Erstgelenk-Bedienelement 40 in eine Ausgangsstellung, in der die Läufer 56, 42 in Arretierstellung sind und in der sowohl das erste Gelenk 20 als auch das zweite Gelenk 22 drehstarr arretiert sind. Wird das Erstgelenk-Bedienelement 40 mit der Betätigungskraft F beaufschlagt, so kommt ein Koppelement 60 außer Eingriff mit einem Widerlager 62, so dass die Sitzschale 12 und die Rückenschale 14 relativ zueinander gekoppelt um die Schwenkachse S schwenken können.

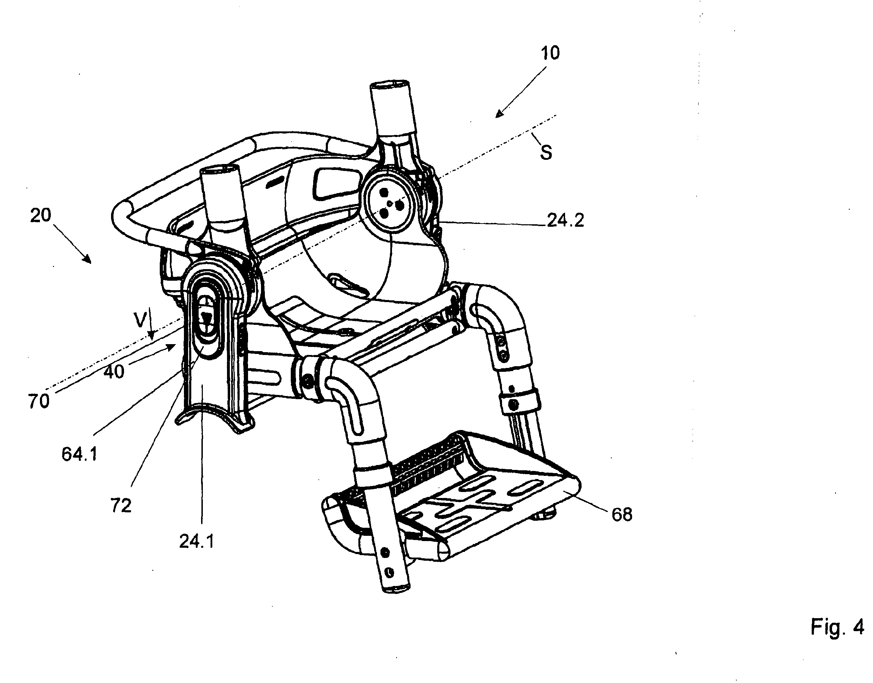

Figur 4 zeigt eine perspektivische Ansicht des Sitzes 10, in der die Erstgelenk-Bedieneinheit 40 leichter zu sehen ist. Die Erstgelenk-Bedieneinheit 40 ist ausgebildet, dass sie eine in Figur 4 gezeigte Sicherungsstellung besitzt. In dieser Sicherungsstellung liegt das Erstgelenk-Bedienelement 40 so auf einem Gehäuse 64.1 auf, dass es auch beim Aufbringen der Betätigungskraft F nicht entlang der Schwenkachse S bewegbar ist.

Durch Schieben eines Sicherungsschiebers 70 des Erstgelenk-Bedienelements 40 in eine Verschieberrichtung V, die im Wesentlichen senkrecht zur Schwenkachse S verläuft, wird das Erstgelenk-Bedienelement 40 in eine Aktivierungsstellung gebracht, in der das erste Gelenk 20 und das zweite Gelenk 22 wie oben beschrieben durch Aufbringen der Betätigungskraft F auf einen Schubknopf 72 des Erstgelenk-Bedienelements 40 gelöst werden können. Durch eine Spiralfeder 66 ist das Erstgelenk-Bedienelement 40 in die in Figur 4 gezeigt Sicherungsstellung vorgespannt. Figur 4 zeigt zudem eine Fußauflage 68, die an der Sitzschale 12 montiert ist.

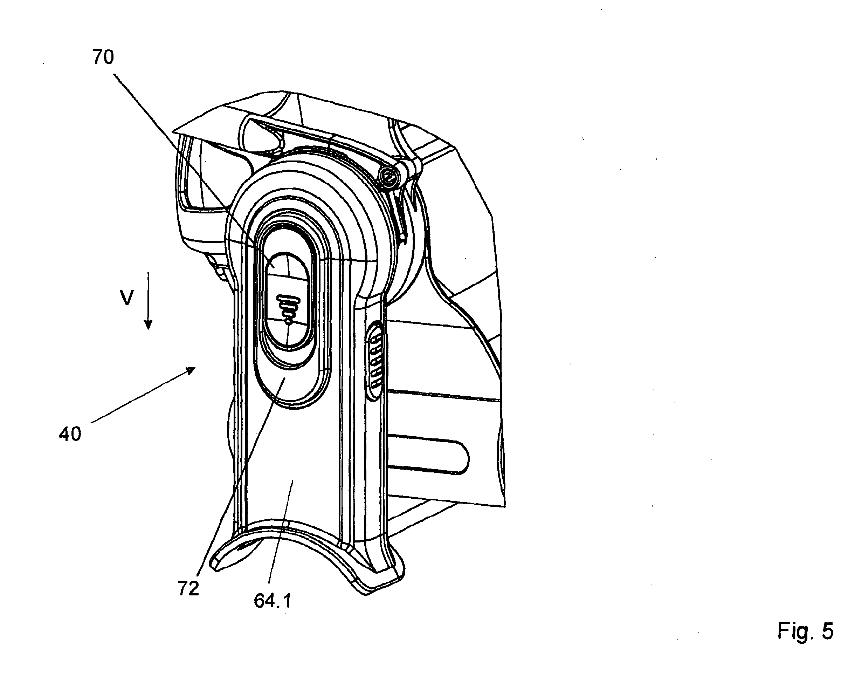

In Figur 5 ist ein Ausschnitt aus Figur 4 gezeigt. Es ist zu erkennen, dass das Erstgelenk-Bedienelement 40 einen Sicherungsschieber 70 und einen Schubknopf 72 umfasst. Wird der Sicherungsschieber 70 in Verschieberichtung V, in Figur 5 nach unten, geschoben, so wird das Erstgelenk-Bedienelement 40 dadurch freigegeben, dass anschließend sowohl der Sicherungsschieber 70 als auch der Schubknopf 72 in das Gehäuse 64.1 eingedrückt werden können. Der Sicherungsschieber 70 ist relativ zum Schubknopf 72 wie oben beschrieben vorgespannt.

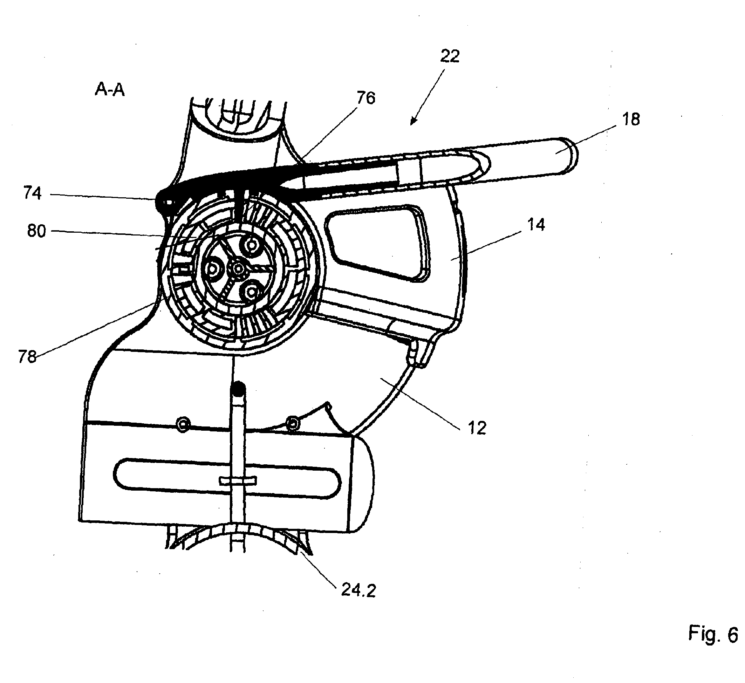

Figur 6 zeigt einen Schnitt entlang der Linie A-A gemäß Figur 3 durch das zweite Gelenk 22. Der Arretierbügel 18 ist in einem Zapfen 74 an der Rückenschale 14 befestigt und durchgreift mit einer Nase 76 eine Rückenschalen-Hülse 78, die einstückig an der Rückenschale 14 ausgebildet ist. In einer in Figur 6 gezeigten Koppelstellung durchgreift die Nase 76 zudem eine Sitzschalen-Hülse 80, so dass die Sitzschale 12 relativ zur Rückenschale 14 festgelegt ist.

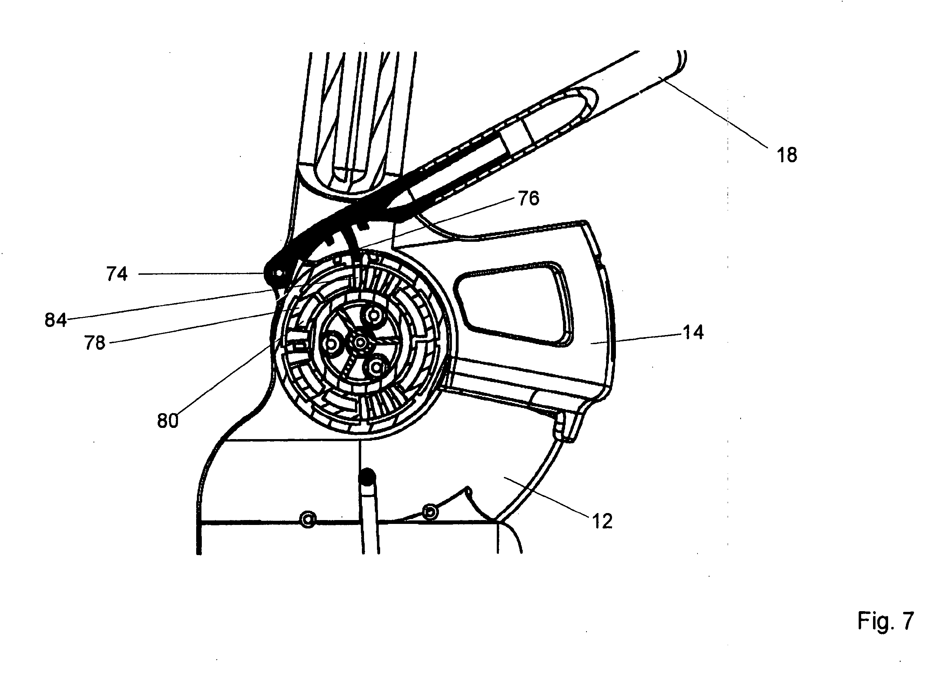

Figur 7 zeigt den Fall, dass sich der Arretierbügel 18 in einer Freigabestellung befindet, in der er die Sitzschalen-Hülse 80 nicht mehr mit seiner Nase 76 durchgreift. In dieser Freigabestellung ist die Sitzschale 12 relativ zur Rückenschale 14 schwenkbar und kann verstellt werden.

Über Blattfedern 82.1, 82.2 wird bewirkt, dass die Nase 76 in die radial nächste Tasche 84 in der Rückenschalenhülse 78 eingreift, so dass die Sitzschale 12 und die Rückenschale 14 erneut miteinander drehfest verbunden sind.

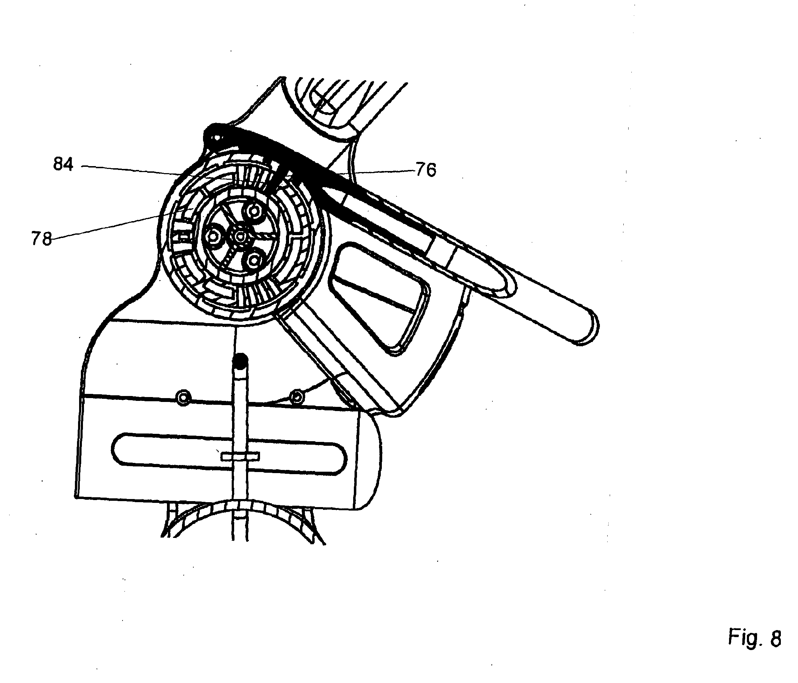

Figur 8 zeigt den Zustand, in dem die Nase 76 wie oben beschrieben in die Tasche 84 in der Rückenschalen-Hülse 78 eingerastet ist.

### Bezugszeichenliste

- 10: Sitz
- 12: Sitzschale
- 14: Rückenschale
- 16: Schwenkvorrichtung
- 18: Arretierbügel

- 20: erstes Gelenk
- 22: zweites Gelenk
- 24.1, .2: Anschlussstück
- 26.1, .2: Anschlusselement
- 28: Gestell

- 30.1, .2: Aufnahmestück
- 32: Rehabilitations- Kindersportkarre
- 34: Hinterrad
- 36: Vorderrad
- 38: Schubbügel

- 40: Erstgelenk- Bedienelement
- 42: Läufer
- 44: Verzahnungseinheit
- 46: Schubstange
- 48: erstes Ende

- 50: zweites Ende
- 52: Wippe
- 54: Auflagerstelle
- 56: zweiter Läufer
- 58: Feder
- 59: Feder

- 60: Riegelelement
- 62: Widerlager
- 64: Gehäuse
- 66: Spiralfeder
- 68: Fußauflage

- 70: Sicherungsschieber
- 72: Schubknopf
- 74: Zapfen
- 76: Nase
- 78: Rückenschalen- Hülse

- 80: Sitzschalen-Hülse
- 82.1, .2: Blattfeder
- 84: Tasche

- S: Schwenkachse
- F: Betätigungskraft
- P: Pfeil
- V: Verschieberichtung

## Patentansprüche

1. Rehabilitations-Kindersportkarre mit
(a) einem Gestell (28),
(b) einem Sitz (10) und
(c) einer Schwenkvorrichtung (16), die
(i) den Sitz (10) zumindest in Teilen mit dem Gestell (28) um eine Sitz-Schwenkachse (S) schwenkbar verbindet und
(ii) ein erstes Gelenk (20) und ein zweites Gelenk (22) umfasst, die auf einander gegenüber liegenden Seiten am Sitz (10) angebracht sind,
(iii) wobei das erste Gelenk (20) und das zweite Gelenk (22) arretierbar sind,
(d) wobei das erste Gelenk (20) ein Erstgelenk-Bedienelement (40) zum Lösen des ersten Gelenks (20) umfasst,
(e) wobei das zweite Gelenk (22) mittels einer schubstabilen Übertragungsvorrichtung mit dem Erstgelenk-Bedienelement (40) so verbunden ist, dass bei einem Betätigen des Erstgetenk-Bedienelements (40) das erste Gelenk (20) und das zweite Gelenk (22) gelöst werden und
(f) wobei das zweite Gelenk (22) ein Zweitgelenk-Bedienelement zum Arretieren und Lösen des zweiten Gelenks (22) besitzt, wobei das Zweitgelenk-Bedienelement mittels der schubstabilen Übertragungsvorrichtung (46) so mit dem ersten Gelenk (20) verbunden ist, dass bei einem Lösen des zweiten Gelenks (22) das erste Gelenk (20) gelöst wird,
**dadurch gekennzeichnet, dass**
(g) der Sitz integral mittels der Schwenkvorrichtung (16) an dem Gestell (28) befestigt ist.

2. Rehabilitations-Kindersportkarre nach Anspruch 1, **dadurch gekennzeichnet, dass** die Übertragungsvorrichtung eine Schubstange (46) umfasst.

3. Rehabilitations-Kindersportkarre nach Anspruch 2, **dadurch gekennzeichnet, dass** die Schubstange (46) bogenförmig gebogen ist und in einer Betriebsstellung der Rehabilitations-Kindersportkarre (32) zumindest teilweise unterhalb des Sitzes (10) verläuft.

4. Rehabilitations-Kindersportkarre nach einem der vorstehenden Ansprüche, **dadurch gekennzeichnet, dass** das erste Gelenk (20) und das zweite Gelenk (22) in eine Arretierstellung vorgespannt sind.

5. Rehabilitations-Kindersportkarre nach einem der vorstehenden Ansprüche, **dadurch gekennzeichnet, dass** das Erstgelenk-Bedienelement (40) so ausgebildet ist, dass es
- eine Sicherungsstellung und eine Aktivierungsstellung besitzt und
- nur in der Aktivierungsstellung das erste Gelenk (20) zu lösen ist.

6. Rehabilitations-Kindersportkarre nach Anspruch 5, **dadurch gekennzeichnet, dass** das Erstgelenk-Bedienelement (40) von der Sicherungsstellung in die Aktivierungsstellung schiebbar ist.

7. Rehabilitations-Kindersportkarre nach Anspruch 6, **dadurch gekennzeichnet, dass** das Erstgelenk-Bedienelement (40)
- einen Schubknopf (72) und
- einen am Schubknopf (72) angebrachten Sicherungsschieber (70), der im Wesentlichen senkrecht zu der Schwenkachse (S) von der Sicherungsstellung in die Aktivierungsstellung schiebbar ist,
umfasst.

8. Rehabilitations-Kindersportkarre nach Anspruch 5 bis 7, **dadurch gekennzeichnet, dass** das erste Gelenk (20) durch eine translatorische Bewegung des in der Aktivierungsstellung befindlichen Erstgelenk-Bedienelements (40) in Richtung der Sitz-Schwenkachse lösbar ausgebildet ist.

9. Rehabilitations-Kindersportkarre nach Anspruch 8, **dadurch gekennzeichnet, dass** die Schubstange (46) über eine Wippe (52) auf ein Riegelelement (60) des zweiten Gelenks (22) wirkt.

10. Rehabititations-Kindersportkarre nach einem der Ansprüche 5 bis 9, **dadurch gekennzeichnet, dass** Erstgelenk-Bedienelement (40) in die Sicherungsstellung vorgespannt ist.

11. Rehabilitations-Kindersportkarre nach einem der vorstehenden Ansprüche, **dadurch gekennzeichnet, dass**
- der Sitz (10) eine Sitzschale (12), eine Rückenschale (14) und einen Arretierbügel (18) umfasst,
- wobei die Schwenkvorrichtung (16) so ausgebildet ist, dass der Arretierbügel (18) eine Koppelstellung, in der die Rückenschale (14) relativ zur Sitzschale (12) fixiert ist, und eine Freigabestellung, in der die Rückenschale (14) relativ zur Sitzschale (12) verschwenkbar ist, aufweist.

12. Rehabilitations-Kindersportkarre nach Anspruch 11, **dadurch gekennzeichnet, dass** die Schwenkvorrichtung so ausgebildet ist, dass dann, wenn
- der Arretierbügel (18) in der Koppelstellung ist und
- das Erstgelenk-Bedienelement (40) betätigt ist,
die Sitzschale (12) und die Rückenschale (14) im relativ zueinander fixierten Zustand um die Schwenkachse (S) schwenkbar sind.

## Claims

1. A rehabilitation children's sport stroller, with
(a) a frame (28),
(b) a seat (10) and
(c) a pivoting device (16) which
(i) connects the seat (10), at least in parts, to the frame (28) pivotably about a seat pivot axis (S) and
(ii) comprises a first joint (20) and a second joint (22) which are attached to the seat (10) on sides lying opposite one another,
(iii) the first joint (20) and the second joint (22) being lockable,
(d) the first joint (20) comprising a first-joint operating element (40) for releasing the first joint (20),
(e) wherein the second joint (22) is connected to the first-joint operating element (40) by means of a transmission device having push stability, so that the first joint (20) and the second joint (22) are released when the first-joint operating element (40) is actuated, and
(f) wherein the second joint (22) possesses a second-joint operating element for locking and releasing the second joint (22), the second-joint operating element being connected to the first joint (20) by means of the transmission device (46) having push stability, so that, when the second joint (22) is released, the first joint (20) is released
**characterized in that**
(g) the seat (10) is integrally fastened to the frame by means of the pivoting device (16).

2. The rehabilitation children's sport stroller as claimed in claim 1, **characterized in that** the transmission device comprises a push rod (46).

3. The rehabilitation children's sport stroller as claimed in claim 2, **characterized in that** the push rod (46) is bent arcuately and, in an operating position of the rehabilitation children's sport stroller (32), runs at least partially underneath the seat (10).

4. The rehabilitation children's sport stroller as claimed in one of the preceding claims, **characterized in that** the first joint (20) and the second joint (22) are prestressed into a locking position.

5. The rehabilitation children's sport stroller as claimed in one of the preceding claims, **characterized in that** the first-joint operating element (40) is designed so that
- it possesses a securing position and an activating position, and
- the first joint (20) can be released in the activating position only.

6. The rehabilitation children's sport stroller as claimed in claim 5, **characterized in that** the first-joint operating element (40) can be pushed from the securing position into the activating position.

7. The rehabilitation children's sport stroller as claimed in claim 6, **characterized in that** the first-joint operating element (40) comprises
- a push knob (72) and
- a securing slide (70) which is attached to the push knob (72) and which can be pushed from the securing position into the activating position essentially perpendicularly with respect to the pivot axis (S).

8. The rehabilitation children's sport stroller as claimed in claims 5 to 7, **characterized in that** the first joint (20) is designed to be releasable by means of a translational movement of the first-joint operating element (40) located in the activating position in the direction of the seat pivot axis.

9. The rehabilitation children's sport stroller as claimed in claim 8, **characterized in that** the push rod (46) acts via a rocker (52) upon a catch element (60) of the second joint (22).

10. The rehabilitation children's sport stroller as claimed in one of claims 5 to 9, **characterized in that** the first-joint operating element (40) is prestressed into the securing position.

11. The rehabilitation children's sport stroller as claimed in one of the preceding claims, **characterized in that**
- the seat (10) comprises a seat shell (12), a back shell (14) and a locking bar (18),
- the pivoting device (16) being designed so that the locking bar (18) has a coupling position in which the back shell (14) is fixed in relation to the seat shell (12), and a freeing position in which the back shell (14) is pivotable in relation to the seat shell (12).

12. The rehabilitation children's sport stroller as claimed in claim 11, **characterized in that** the pivoting device is designed so that, when
- the locking bar (18) is in the coupling position and
- the first-joint operating element (40) is actuated,
the seat shell (12) and the back shell (14) are pivotable about the pivot axis (S) in the state fixed in relation to one another.

## Revendications

1. Poussette de rééducation sportive pour enfants, comprenant
(a) un châssis (28),
(b) un siège (10), et
(c) un dispositif de pivotement (16)
(i) qui relie le siège (10) au moins partiellement au châssis (28) en pivotement autour d'un axe de pivotement (S) pour le siège, et
(ii) qui comprend une première articulation (20) et une seconde articulation (22), lesquelles sont montées sur le siège (10) sur des côtés mutuellement opposés,
(iii) et dans lequel la première articulation (20) et la seconde articulation (22) sont susceptibles d'être arrêtées,
(d) dans laquelle la première articulation (20) comprend un élément de manipulation de première articulation (40) pour libérer la première articulation (20),
(e) dans laquelle la seconde articulation (22) est reliée, au moyen d'un dispositif de transmission stable vis-à-vis de la poussée, à l'élément de manipulation de première articulation (40) de telle façon que lors d'un actionnement de l'élément de manipulation de première articulation (40) la première articulation (20) et la seconde articulation (22) sont libérées, et
(f) dans laquelle la seconde articulation (22) possède un élément de manipulation de seconde articulation pour arrêter et libérer la seconde articulation (22), de sorte que le l'élément de manipulation de seconde articulation est relié au moyen du dispositif de transmission stable vis-à-vis de la poussée (46) à la première articulation (20) de telle façon que lors d'une libération de la seconde articulation (22) la première articulation (20) est libérée,
**caractérisée en ce que**
(g) le siège est fixé intégralement sur le châssis (28) au moyen du dispositif de pivotement (16).

2. Poussette de rééducation sportive pour enfants selon la revendication 1, **caractérisée en ce que** le dispositif de transmission comprend une barre de poussée (46).

3. Poussette de rééducation sportive pour enfants selon la revendication 2, **caractérisée en ce que** la barre de poussée (46) est cintrée en forme d'arc et, dans une situation de fonctionnement de la poussette de rééducation sportive pour enfants (32), elle s'étend au moins partiellement au-dessous du siège (10).

4. Poussette de rééducation sportive pour enfants selon l'une des revendications précédentes, **caractérisée en ce que** la première articulation (20) et la seconde articulation (22) sont précontraintes dans une position d'arrêt.

5. Poussette de rééducation sportive pour enfants selon l'une des revendications précédentes, **caractérisée en ce que** l'élément de manipulation de première articulation (40) est ainsi réalisé
- qu'il possède une position de blocage et une position d'activation, et
- que la première articulation (20) ne peut être libérée que dans la position d'activation.

6. Poussette de rééducation sportive pour enfants selon la revendication 5, **caractérisée en ce que** l'élément de manipulation de première articulation (40) peut être passé de la position de blocage vers la position d'activation.

7. Poussette de rééducation sportive pour enfants selon la revendication 6, **caractérisée en ce que** l'élément de manipulation de première articulation (40) comprend
- une tête de poussée (72), et
- un tiroir de blocage (70) monté sur la tête de poussée (72), qui peut être déplacé sensiblement perpendiculairement à l'axe de pivotement (S) de la position de blocage vers la position d'activation.

8. Poussette de rééducation sportive pour enfants selon les revendications 5 à 7, **caractérisée en ce que** la première articulation (20) est réalisée de manière à pouvoir être libérée par un mouvement de translation de l'élément de manipulation de première articulation (40), qui se trouve dans la position d'activation, en direction de l'axe de pivotement du siège.

9. Poussette de rééducation sportive pour enfants selon la revendication 8, **caractérisée en ce que** la barre de poussée (46) agit via une bascule (52) sur un élément de verrouillage (60) de la seconde articulation (22).

10. Poussette de rééducation sportive pour enfants selon l'une des revendications 5 à 9, **caractérisée en ce que** l'élément de manipulation de première articulation (40) est précontrainte dans la position de blocage.

11. Poussette de rééducation sportive pour enfants selon l'une des revendications précédentes, **caractérisée en ce que**
- le siège (10) comprend une coque d'assise (12), une coque de dossier (14) et un arceau d'arrêt (18),
- et le dispositif de pivotement (16) est ainsi réalisé que l'arceau d'arrêt (18) possède une position d'accouplement, dans laquelle la coque de dossier (14) est fixée par rapport à la coque d'assise (12), et une position de libération, dans laquelle la coque de dossier (14) est capable de pivoter par rapport à la coque d'assise (12).

12. Poussette de rééducation sportive pour enfants selon la revendication 11, **caractérisée en ce que** le dispositif de pivotement est ainsi réalisé que,
- quand l'arceau d'arrêt (18) est dans la position d'accouplement et
- que l'élément de manipulation de première articulation (40) est actionné,
la coque d'assise (12) et la coque de dossier (14) sont capables de pivoter autour de l'axe de pivotement dans une situation fixe l'une par rapport à l'autre.
